# FASCICULE DE BREVET EUROPEEN

(11) **EP 1 610 709 B1**
(45) Date de publication et mention de la délivrance du brevet: **09.07.2008**
(21) Numéro de dépôt: 04742439.5
(22) Date de dépôt: 06.04.2004
(51) Int. Cl.: A61C 15/00, A46B 7/02

(54) **DISPOSITIF DE NETTOYAGE DES ESPACES INTER-DENTAIRES**
VORRICHTUNG FÜR DIE REINIGUNG VON ZAHNZWISCHENRÄUMEN
DEVICE FOR CLEANING INTER-DENTAL SPACES

(30) Priorité: 07.04.2003 FR 0304273
(43) Date de publication de la demande: 04.01.2006
(73) Titulaire: LESAGE, Patrick, F-35400 Saint-Malo (FR)
(72) Inventeur: LESAGE, Patrick, F-35400 Saint-Malo (FR)
(74) Mandataire: Dronne, Guy
(86) Numéro de dépôt international: PCT/FR2004/000848
(87) Numéro de publication internationale: WO 2004/091425

(56) Documents cités:
- DE-A- 19 514 710
- US-A- 6 082 999

## Description

La présente invention a pour objet un dispositif de nettoyage des espaces inter-dentaires.

Pour permettre le nettoyage des espaces inter-dentaires, le dispositif le plus connu est appelé en général "brossette". Ces moyens de nettoyage sont constitués d'une âme métallique torsadée d'environ 1 mm de diamètre sur laquelle sont fixés des poils définissant un volume cylindrique ou conique de 5 à 10 mm de diamètre.

Ils sont souvent munis d'un manche plus ou moins sophistiqué pour en améliorer l'ergonomie. Par ses dimensions réduites, cette brossette peut effectivement être introduite dans l'espace entre deux dents adjacentes et permettre le nettoyage efficace de cette zone, comme celui du US 6082999.

Cependant, ces brossettes présentent un certain nombre d'inconvénients qui, soit altèrent l'efficacité du nettoyage, soit dissuadent l'utilisateur de continuer à s'en servir.

En se référant aux figures annexées 1A, 1B et 1C, on va expliciter ces inconvénients.

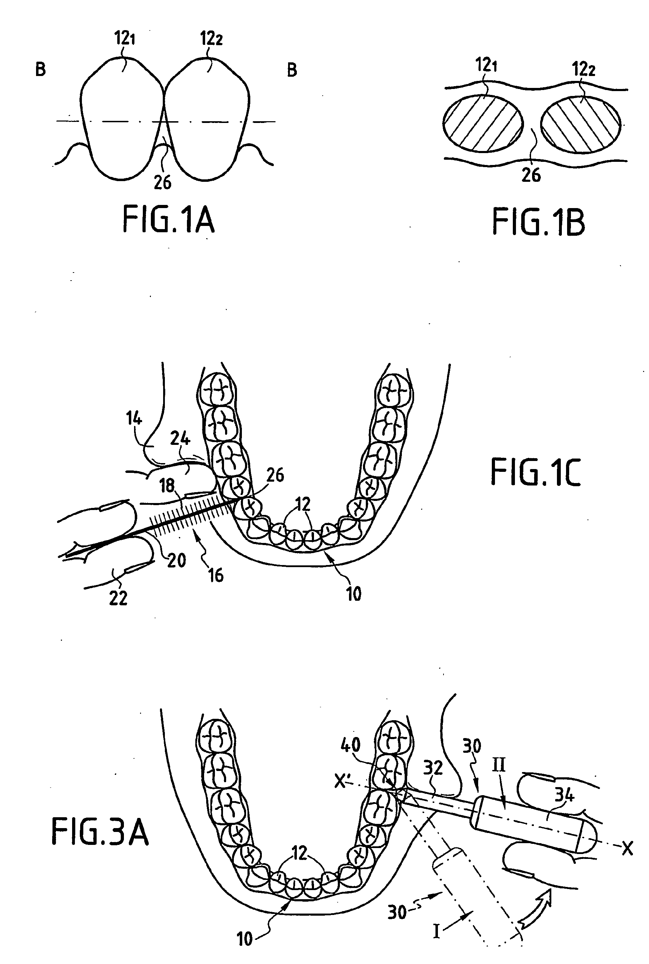

Sur la figure 1C, on a représenté un maxillaire inférieur 10 avec des dents 12 ainsi que la paroi latérale buccale 14. Sur cette figure, on a également montré une brossette 16 avec ses poils 18 et sa tige de préhension 20. La figure montre également la saisie du manche 20 de la brossette par les doigts 22 d'une première main et l'utilisation d'un ou plusieurs doigts 24 de l'autre main pour écarter la paroi buccale 14 et permettre l'accès à l'espace inter-dentaire souhaité 26.

Sur la figure 1A, on a représenté deux dents consécutives 12₁ et 12₂ et l'espace inter-dentaire correspondant 26. La figure 1B représente les deux dents en coupe selon le plan B-B.

De façon classique, pour utiliser la brossette, il faut d'abord en positionner l'extrémité en face de l'espace inter-dentaire souhaité en refoulant les tissus mous tels que la lèvre, la joue ou la langue puis on introduit la brossette 16 dans l'axe de l'espace inter-dentaire et on effectue un mouvement de va-et-vient.

Les espaces inter-dentaires se situent le plus souvent dans des zones de la bouche d'accès difficiles, notamment dans le secteur molaire. De plus, les lèvres et les joues ne se laissent pas refouler aisément pour permettre une mise en place convenable de la brossette. En outre, les brossettes comportent une âme 20 constituée par une torsade métallique très fine afin de permettre l'insertion de la brossette dans l'espace inter-dentaire. L'âme de la brossette peut donc être facilement déformée. Enfin, les patients n'ont pas toujours l'habileté requise pour présenter convenablement l'extrémité de la brossette en regard de l'espace inter-dentaire à nettoyer.

Il résulte de toutes les considérations précédentes que l'utilisation des brossettes de type connu est donc délicate et la déformation de celle-ci entraîne un mauvais nettoyage ou une destruction précoce du matériel, ainsi que l'abandon fréquent de l'utilisation du dispositif de nettoyage par l'utilisateur.

Un objet de la présente invention est de fournir un dispositif de nettoyage des espaces inter-dentaires qui soit d'une efficacité supérieure et d'une utilisation plus aisée que l'état actuel de la technique, représenté principalement par les brossettes inter-dentaires.

Pour atteindre ce but selon l'invention, le dispositif de nettoyage des espaces inter-dentaires se caractérise en ce qu'il comprend :
- un élément tubulaire de guidage présentant une première extrémité ouverte profilée pour permettre son positionnement à l'entrée d'un espace inter-dentaire ;
- des moyens de nettoyage (brosse) montés mobiles dans ledit élément tubulaire et dont l'axe est assujetti à rester confondu avec celui dudit élément tubulaire ;
- des moyens de support du moyen de nettoyage ayant une direction longitudinale fixe par rapport à l'axe dudit élément tubulaire de guidage ; et
- des moyens de préhension pour déplacer lesdits moyens de nettoyage par l'intermédiaire desdits moyens de support entre une première position dans laquelle ils sont entièrement disposés à l'intérieur dudit élément tubulaire, et une deuxième position dans laquelle ils sont disposés entièrement à l'extérieur de ladite première extrémité dudit élément tubulaire.

De préférence, le dispositif comprend en outre des moyens de rappel des moyens de nettoyage dans leur position initiale, et, de préférence également, des moyens de limitation du déplacement relatif des moyens de support et de nettoyage par rapport à l'élément tubulaire de guidage.

On comprend que, lors de la mise en place du dispositif de nettoyage inter-dentaire, la brossette est disposée entièrement à l'intérieur de l'élément tubulaire. Elle ne peut donc être altérée mécaniquement. De plus, cette mise en place initiale est facilitée du fait que l'ensemble constitué par l'élément tubulaire et les moyens de préhension présente une résistance mécanique suffisante qui permet l'écartement des tissus mous tels que la lèvre, la joue ou la langue, en prenant appui dans l'espace inter-dentaire. En outre, l'extrémité ouverte profilée de l'élément tubulaire facilite considérablement le positionnement initial du dispositif de nettoyage à l'entrée de la zone inter-dentaire.

Selon un premier mode de réalisation, les moyens de préhension comprennent un corps tubulaire dont l'axe est aligné avec celui dudit élément tubulaire de guidage, le corps tubulaire étant mobile par rapport audit élément tubulaire selon la direction commune de leurs axes. Le moyen de support comprend une tige disposée selon ledit axe commun et dont une première extrémité est solidaire desdits moyens formant brosse et dont la deuxième extrémité est solidaire dudit corps tubulaire.

On comprend que, dans ce premier mode de réalisation, après la mise en place initiale du dispositif de nettoyage en regard de l'espace inter-dentaire, en appuyant sur le corps tubulaire, on provoque la sortie des moyens formant brosse qui pénètrent ainsi automatiquement dans l'espace inter-dentaire souhaité.

Selon un deuxième mode de réalisation de l'invention, lesdits moyens de préhension comprennent une pièce allongée qui est montée mobile dans ledit élément tubulaire de guidage et dont une première extrémité est solidaire des moyens de nettoyage.

Dans le cas de ce deuxième mode de réalisation de l'invention, après la mise en place initiale du dispositif en regard de l'espace inter-dentaire, il suffit d'appuyer sur les moyens de préhension pour obtenir la sortie automatique des moyens formant brosse dans l'espace inter-dentaire.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- les figures 1A, 1B et 1C déjà décrites illustrent l'utilisation de brossettes inter-dentaires selon l'état de la technique ;
- la figure 2 est une vue en coupe longitudinale d'un premier mode de réalisation du dispositif de nettoyage ;
- les figures 3A, 3B et 3C illustrent l'utilisation du premier mode de réalisation du dispositif de nettoyage ;
- la figure 4 montre en coupe axiale un deuxième mode de réalisation du dispositif de nettoyage ;
- les figures 5A et 5B montrent l'utilisation du dispositif de nettoyage de la figure 4 ; et
- la figure 6 montre en coupe longitudinale un troisième mode de réalisation du dispositif de nettoyage.

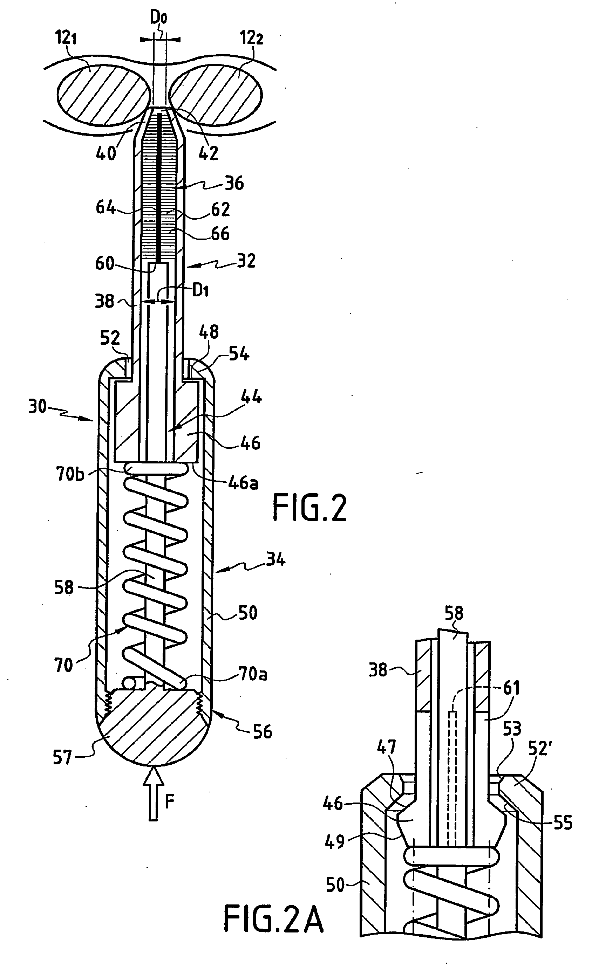

En se référant tout d'abord à la figure 2, on va décrire un premier mode de réalisation d'un dispositif de nettoyage inter-dentaire 30. Celui-ci est constitué essentiellement par un élément tubulaire de guidage 32, des moyens de préhension 34, des moyens de nettoyage formant brosse 36, et des moyens de support 58.

Plus précisément, l'élément tubulaire de guidage 32 comporte une pièce tubulaire 38 dont une première extrémité 40 se termine par une forme tronconique de repérage et de positionnement dans l'espace inter-dentaire 42. Dans sa partie courante, la pièce tubulaire 38 présente un diamètre interne D0, alors que son extrémité ouverte 42 présente un diamètre D1 inférieur à D0. La deuxième extrémité 44 de la pièce tubulaire 38 constitue une partie élargie 46 qui définit sur sa face avant un épaulement 48.

Les moyens de préhension 34 sont constitués par un corps tubulaire 50 dont une première extrémité 52 est ouverte pour recevoir la pièce tubulaire 38. L'extrémité ouverte 52 comporte un rebord 54 qui peut coopérer avec l'épaulement 48 de la pièce tubulaire. La deuxième extrémité 56 du corps tubulaire 50 est fermée par un fond 57. Sur ce fond 57 est montée une tige axiale 58 formant les moyens de support qui s'étend sur toute la longueur du corps tubulaire et pénètre dans la pièce tubulaire 38. A son extrémité libre 60, la tige 58 est équipée d'une brossette 62 de type classique qui constitue ainsi les moyens de nettoyage. La brossette 62 comporte un axe 64 de diamètre très réduit fixé à l'extrémité de la tige 58 et des poils 66 fixés sur l'axe 64. Le diamètre de la brossette est sensiblement égal à D0.

De préférence, la brossette 62 est fixée à l'extrémité de la tige 58 par des moyens de fixation réversibles 63, tels qu'un système à filetage ou à baïonnette.

Le dispositif de nettoyage 30 comporte encore des moyens élastiques de rappel constitués dans ce mode de réalisation par un ressort hélicoïdal 70 qui entoure une partie de la tige 58 et dont une première extrémité 70a est en appui sur le fond 57 du corps tubulaire et dont la deuxième extrémité 70b est en appui sur la face postérieure 46a de la partie élargie 46 de la pièce tubulaire 38. Au repos, c'est-à-dire dans la position représentée sur la figure 2, le ressort 70 maintient l'épaulement 48 de la pièce tubulaire sur le rebord 54 du corps tubulaire. Dans cette position, la brossette 62 est entièrement disposée à l'intérieur de la pièce tubulaire 38, et donc protégée.

De préférence, le fond 57 est une pièce distincte de la pièce tubulaire 50 et est fixée par vissage ou clipsage sur l'extrémité 56 de celle-ci. Cela permet l'extraction de la tige 58 et de la brossette 62 pour faciliter le nettoyage du dispositif.

On comprend que, si l'utilisateur appuie selon la direction de la flèche F sur le corps tubulaire 50, l'extrémité 42 du dispositif étant en appui sur les dents 12, le ressort 70 est comprimé et la brossette 62 fait saillie progressivement hors de l'ouverture 42 de la pièce tubulaire 38 pénétrant ainsi dans l'espace inter-dentaire 26.

Il faut préciser que la partie 46 de diamètre plus important coopère avec la face interne du corps tubulaire 50 pour assurer le guidage en translation de la pièce tubulaire 38 par rapport au corps tubulaire 50 et maintenir l'alignement des axes du corps tubulaire et de la pièce tubulaire selon l'axe commun X-X' qui est bien sûr également l'axe de la brossette 62.

Pour faciliter le montage et le démontage du dispositif, il est également possible de donner à l'extrémité 46 de la pièce tubulaire 38 ainsi qu'à l'extrémité 52 du corps tubulaire 50 une forme particulière représentée sur la figure 2A.

L'extrémité de la pièce tubulaire, qui porte alors la référence 46' comporte deux chanfreins 47 et 49 qui peuvent coopérer avec les chanfreins 53 et 55 prévus sur l'extrémité 52' du corps tubulaire 50. De plus, l'extrémité de la pièce tubulaire 38 peut comporter des fentes longitudinales, par exemple quatre, telles que 61 pour faciliter la déformation élastique de la pièce lors de son montage et démontage par clipsage.

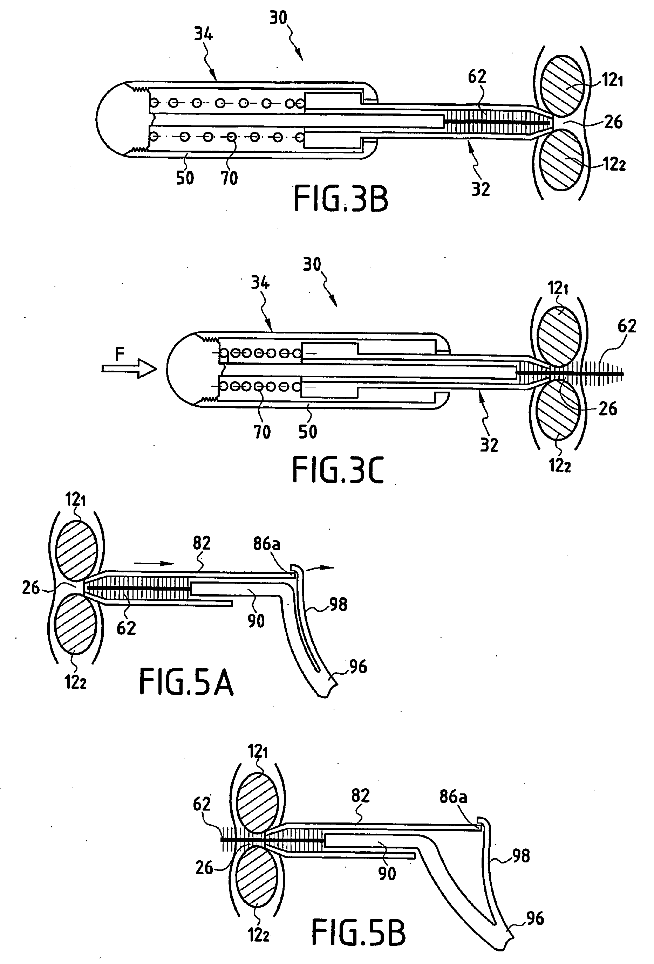

En se référant maintenant aux figures 3A à 3C, on va décrire l'utilisation de ce premier mode de réalisation du dispositif de nettoyage. Sur la figure 3A, on a représenté la position initiale I du dispositif de nettoyage 30. Dans cette position, l'extrémité de guidage 40 de l'élément tubulaire 32 est en appui sur l'extrémité d'entrée de l'espace inter-dentaire. Par pivotement, l'utilisateur amène le dispositif 30 dans la position repérée II provoquant simultanément l'écartement de la joue. Dans cette deuxième position II, l'axe X-X' du dispositif s'étend selon l'axe de l'espace inter-dentaire. Dans cette position initiale, comme le montre la figure 3B, la brossette 62 est entièrement incluse dans l'élément tubulaire 32 et est donc ainsi mécaniquement protégée.

Dans un deuxième temps représenté sur la figure 3C, l'utilisateur appuie sur l'extrémité 56 du corps tubulaire de préhension 50. L'élément tubulaire 32 étant appliqué contre les dents, le ressort 70 se comprime et la brossette 62 fait saillie dans l'espace inter-dentaire 26. Pour réaliser le nettoyage convenable par mouvement de va-et-vient de la brossette 62 dans l'espace inter-dentaire, il suffit de procéder à des pressions successives puis à des relâchements sur le corps tubulaire 50 de préhension.

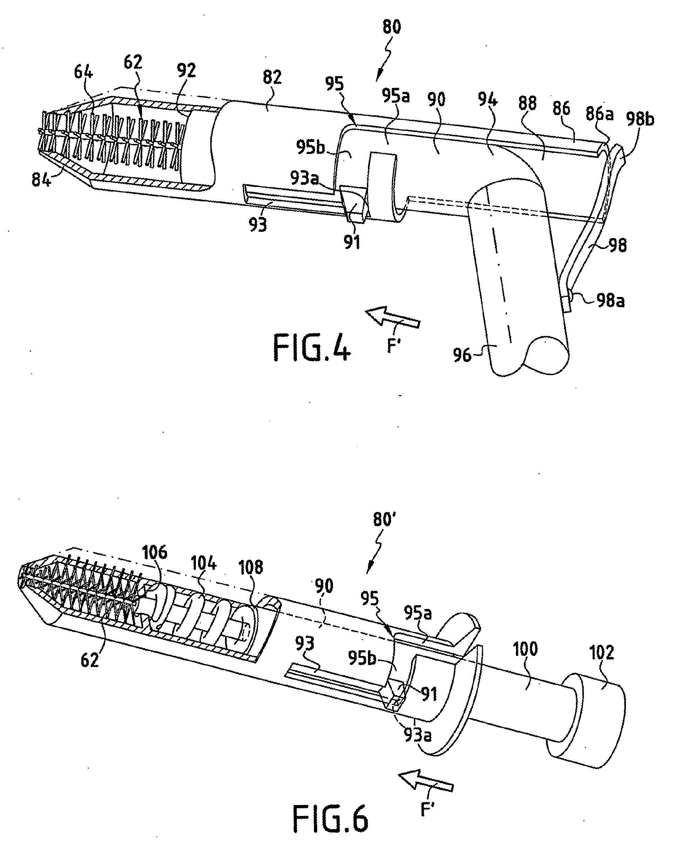

En se référant maintenant à la figure 4, on va décrire un deuxième mode de réalisation du dispositif de nettoyage d'espaces inter-dentaires qui porte la référence 80. Le dispositif est constitué par un élément tubulaire 82 dont la première extrémité ouverte 84 a une forme tronconique, dont la deuxième extrémité 86 est ouverte et qui présente une échancrure 88 à proximité de cette deuxième extrémité 86. Dans la pièce tubulaire 82 est montée à coulissement une pièce cylindrique 90 formant les moyens de support dont la première extrémité 92 sert de poussoir pour la brossette 62. Plus précisément, l'axe 64 de la brossette est fixé sur l'extrémité 92 de la pièce cylindrique 90. La deuxième extrémité 94 de la pièce cylindrique 90 est prolongée par les moyens de préhension ou manches 96 qui sortent de la pièce tubulaire 82 grâce à l'échancrure 88. Le manche 96 est équipé d'une lame de ressort élastique 98 dont une première extrémité 98a est solidaire du manche 96 et dont la deuxième extrémité 98b est en appui sur le bord 86a de l'extrémité 86 de la pièce tubulaire 82.

Sous l'effet de la lame de ressort 98, la pièce cylindrique 90 et donc la brossette 62 sont maintenues en position rétractée comme le montre la figure 4. On comprend que, l'élément tubulaire 82 étant en appui dans l'espace inter-dentaire, en appliquant une force F' au manche 96 du dispositif, la pièce 90 coulisse dans la pièce tubulaire 82, ce qui entraîne la sortie de la brossette 62 hors de l'extrémité 84.

Les figures 5A et 5B montrent le dispositif de nettoyage 80 respectivement dans son état initial et dans son état d'utilisation.

Sur la figure 6, on a représenté une variante 80' du mode de réalisation de la figure 5. La différence réside essentiellement dans le fait que l'organe de préhension 100 est dans le prolongement de la pièce cylindrique 90 et se termine par un bouton de manoeuvre 102. Les moyens de rappel élastique sont constitués par un ressort hélicoïdal 104 qui entoure une partie rétrécie de la pièce 90 et qui est monté entre un épaulement 106 interne à la pièce tubulaire 82 et l'épaulement 108 de la pièce cylindrique 90.

Pour simplifier le montage et le démontage de la pièce cylindrique 90 par rapport à la pièce de tubulaire 82, dans les deux derniers modes de réalisation, on prévoit de préférence, dans la pièce tubulaire 82, une fente en forme de baïonnette 95 pour l'engagement de l'ergot 91. Cette fente comporte une première portion 95a parallèle à la fente 93 et débouchant à l'extrémité ouverte de la pièce 82 et une deuxième portion 95b en forme d'arc de cercle débouchant dans la fente 93.

Il faut souligner que dans tous les cas, le dispositif de nettoyage est maintenu en position rétractée par un système de rappel élastique et que cette position rétractée est définie par une butée mécanique constituant un moyen de limitation du déplacement relatif des moyens support par rapport à l'élément tubulaire.

## Revendications

1. Dispositif de nettoyage des espaces inter-dentaires, **caractérisé en ce qu'**il comprend :
- un élément tubulaire de guidage (32, 82) présentant une première extrémité ouverte (40, 84) profilée pour permettre son positionnement à l'entrée d'un espace inter-dentaire ;
- des moyens de nettoyage (36, 62) montés mobiles dans ledit élément tubulaire, fixés à une première extrémité desdits moyens de support et dont l'axe est assujetti à rester confondu avec celui dudit élément tubulaire ;
- des moyens de support (58, 90) desdits moyens de nettoyage ayant une direction longitudinale fixe par rapport à l'axe dudit élément tubulaire de guidage ; et
- des moyens de préhension (34, 96, 100) pour déplacer lesdits moyens de nettoyage entre une première position dans laquelle ils sont entièrement disposés à l'intérieur dudit élément tubulaire, et une deuxième position dans laquelle ils sont disposés entièrement à l'extérieur de ladite première extrémité dudit élément tubulaire.

2. Dispositif de nettoyage selon la revendication 1, **caractérisé en ce qu'**il comprend un moyen de rappel (70, 98, 104) tendant à ramener lesdits moyens de nettoyage (36) à intérieur dudit élément tubulaire (32).

3. Dispositif de nettoyage selon l'une quelconque des revendications 1 et 2, **caractérisé en ce que** lesdits moyens de préhension (34) comprennent un corps tubulaire (50) dont l'axe est aligné avec celui dudit élément tubulaire (32), ledit corps tubulaire étant mobile par rapport audit élément tubulaire (32) selon la direction commune des axes et **en ce que** lesdits moyens de support comprennent une tige (58) disposée selon ledit axe commun et dont une première extrémité est solidaire desdits moyens de nettoyage (36) et dont la deuxième extrémité est solidaire dudit corps tubulaire (50).

4. Dispositif de nettoyage selon la revendication 3, **caractérisé en ce que** ledit organe élastique de rappel est un ressort hélicoïdal (70) entourant ladite tige (58) et interposé entre ledit élément tubulaire de guidage (32) et ledit corps tubulaire de préhension (50).

5. Dispositif de nettoyage selon l'une quelconque des revendications 1 et 2, **caractérisé en ce que** lesdits moyens de support comprennent une pièce allongée (90) qui est montée mobile dans ledit élément tubulaire de guidage (82) et dont une première extrémité est solidaire des moyens de nettoyage (62), l'autre extrémité comprend une extension (96) s'étendant hors de la deuxième extrémité (86) au moins en partie ouverte (88) dudit élément tubulaire (82).

6. Dispositif selon les revendications 2 et 5, **caractérisé en ce que** ladite extension (96) formant les moyens de préhension fait un angle fixe avec la direction de ladite pièce allongée (90) et **en ce que** ledit organe de rappel élastique comprend une lame élastique (98) dont une première extrémité (98a) est solidaire de ladite extension (96) et dont l'autre extrémité (98b) est en appui sur la deuxième extrémité ouverte (84) dudit élément tubulaire (82).

7. Dispositif de nettoyage selon l'une quelconque des revendications 1 à 6, **caractérisé en ce que** lesdits moyens de nettoyage comprennent une brossette inter-dentaire (62).

8. Dispositif de nettoyage selon l'une quelconque des revendications 1 à 7, **caractérisé en ce que** ladite première extrémité profilée (40) de l'élément tubulaire est tronconique (42) pour favoriser le positionnement dudit dispositif par rapport à l'espace inter-dentaire.

9. Dispositif de nettoyage selon les revendications 7 et 8, **caractérisé en ce que** le diamètre interne de la partie courante dudit élément tubulaire est sensiblement égal au diamètre externe de ladite brossette (62) et **en ce que** le diamètre de la première extrémité de l'élément tubulaire est inférieur à celui de la partie courante de l'élément tubulaire.

10. Dispositif selon l'une quelconque des revendications 1 à 9 **caractérisé en ce qu'**il comprend des moyens de fixation démontables desdits moyens de nettoyage (62) à l'extrémité desdits moyens de support (58).

11. Dispositif selon quelconque des revendications 1 à 10 **caractérisé en ce qu'**il comprend des moyens de limitation du déplacement relatif des moyens de support (58) et de nettoyage (62) par rapport à l'élément tubulaire de guidage.

## Claims

1. A device for cleaning interdental spaces, **characterised in that** it comprises:
- a tubular guide element (32, 82) having a first profiled open end (40, 84) to allow its positioning at the entry to an interdental space;
- cleaning means (36, 62) mounted movable in said tubular element, said means being fixed at a first end of said support means and having an axis constrained to remain coincident with that of said tubular element;
- support means (58, 90) for said cleaning means having a fixed longitudinal direction relative to the axis of said tubular guide element; and
- gripping means (34, 96, 100) for moving said cleaning means between a first position, in which they are entirely arranged inside said tubular element, and a second position, in which they are arranged entirely outside said first end of said tubular element.

2. The cleaning device according to claim 1, **characterised in that** it comprises a return means (70, 98, 104) tending to return said cleaning means (36) inside said tubular element (32).

3. The cleaning device according to claim 1 or 2, **characterised in that** said gripping means (34) comprise a tubular body (50) having an axis aligned with that of said tubular element (32), said tubular body being movable relative to said tubular element (32) in the common direction of the axes, and **in that** said support means comprise a rod (58) arranged along said common axis and having a first end integral with said cleaning means (36) and a second end integral with said tubular body (50).

4. The cleaning device according to claim 3, **characterised in that** said elastic return member is a helical spring (70) surrounding said rod (58) and interposed between said tubular guide element (32) and said tubular gripping body (50).

5. The cleaning device according to claim 1 or 2, **characterised in that** said support means comprise an elongate piece (90) mounted movable in said tubular guide element (82) and having a first end integral with the cleaning means (62), the other end comprising an extension (96) extending outside the at least partly open second end (86) of said tubular element (82).

6. The device according to claims 2 and 5, **characterised in that** said extension (96) forming the gripping means forms a fixed angle with the direction of said elongate piece (90), and **in that** said elastic return member comprises an elastic blade (98) having a first end (98a) integral with said extension (96) and another end (98b) bearing on the open second end (84) of said tubular element (82).

7. The cleaning device according to any one of claims 1 to 6, **characterised in that** said cleaning means comprise an interdental brush (62).

8. The cleaning device according to any one of claims 1 to 7, **characterised in that** said first profiled end (40) of the tubular element is frustoconical (42) in order to facilitate the positioning of said device relative to the interdental space.

9. The cleaning device according to claims 7 and 8, **characterised in that** the internal diameter of the common part of said tubular element is substantially equal to the external diameter of said brush (62), and **in that** the diameter of the first end of the tubular element is smaller than that of the common part of the tubular element.

10. The device according to any one of claims 1 to 9, **characterised in that** it comprises fixing means that can be detached from said cleaning means (62) at the end of said support means (58).

11. The device according to any one of claims 1 to 10, **characterised in that** it comprises means for limiting the relative displacement of the support means (58) and cleaning means (62) relative to the tubular guide element.

## Patentansprüche

1. Vorrichtung zum Reinigen von Zahnzwischenräumen,
**dadurch gekennzeichnet, dass** sie umfasst:
- ein röhrenförmiges Führungselement (32, 82), das ein erstes offenes, stromlinienförmiges Ende (40, 84) aufweist, um dieses am Eingang eines Zahnzwischenraums positionieren zu können;
- Reinigungsmittel (36, 62), die beweglich in dem röhrenförmigen Element angebracht und an einem ersten Ende der Haltemittel befestigt sind und deren Achse sich zwangsläufig mit der des röhrenförmigen Elements deckt;
- Mittel (58, 90) zum Halten der Reinigungsmittel, die bezüglich der Achse des röhrenförmigen Führungselements eine feste Längsrichtung haben; und
- Greifmittel (34, 96, 100) zum Verschieben der Reinigungsmittel zwischen einer ersten Position, in der sie vollständig innerhalb des röhrenförmigen Elements angeordnet sind, und einer zweiten Position, in der sie vollständig außerhalb des ersten Endes des röhrenförmigen Elements angeordnet sind.

2. Reinigungsvorrichtung nach Anspruch 1,
**dadurch gekennzeichnet, dass** sie ein Rückstellmittel (70, 98, 104) aufweist, das dazu tendiert, die Reinigungsmittel (70, 98, 104) innen in das röhrenförmige Element (32) zurückzubringen.

3. Reinigungsvorrichtung nach einem der Ansprüche 1 oder 2,
**dadurch gekennzeichnet, dass** die Greifmittel (34) einen röhrenförmigen Körper (50) aufweisen, dessen Achse mit der des röhrenförmigen Elements (32) fluchtend angeordnet ist, wobei der röhrenförmige Körper bezüglich des röhrenförmigen Elements (32) in der gleichen Richtung der Achsen beweglich ist, und dass die Haltemittel eine Stange (58) umfassen, die entsprechend dieser gemeinsamen Achse angeordnet ist und deren erstes Ende mit den Reinigungsmitteln (36) fest verbunden ist und deren zweites Ende mit dem röhrenförmigen Körper (50) fest verbunden ist.

4. Reinigungsvorrichtung nach Anspruch 3,
**dadurch gekennzeichnet, dass** das elastische Rückstellorgan eine Schraubenfeder (70) ist, die die Stange (58) umgibt und zwischen dem röhrenförmigen Führungselement (32) und dem röhrenförmigen Greifelement (50) liegt.

5. Reinigungsvorrichtung nach einem der Ansprüche 1 oder 2,
**dadurch gekennzeichnet, dass** die Haltemittel ein längliches Teil (90) umfassen, das in dem röhrenförmigen Führungselement (82) beweglich angebracht ist und dessen erstes Ende mit den Reinigungsmitteln (62) fest verbunden ist und dessen anderes Ende eine Verlängerung (96) aufweist, die sich außerhalb des zweiten Endes (86) wenigstens in dem offenen Teil (88) des röhrenförmigen Elements (82) erstreckt.

6. Vorrichtung nach den Ansprüche 2 und 5,
**dadurch gekennzeichnet, dass** die die Greifmittel bildende Verlängerung (96) einen festen Winkel mit der Richtung des länglichen Teils (90) bildet und dass das elastische Rückstellorgan ein Federblatt (98) aufweist, dessen erstes Ende (98a) mit der Verlängerung (96) fest verbunden ist und dessen anderes Ende (98b) an dem zweiten offenen Ende (84) des röhrenförmigen Elements (82) anliegt.

7. Reinigungsvorrichtung nach einem der Ansprüche 1 bis 6,
**dadurch gekennzeichnet, dass** die Reinigungsmittel ein Interdentalbürstchen (62) umfassen.

8. Reinigungsvorrichtung nach einem der Ansprüche 1 bis 7,
**dadurch gekennzeichnet, dass** das erste stromlinienförmige Ende (40) des röhrenförmigen Elements kegelstumpfförmig (42) ist, um das Positionieren der Vorrichtung bezüglich des Zahnzwischenraums zu begünstigen.

9. Reinigungsvorrichtung nach den Ansprüche 7 und 8,
**dadurch gekennzeichnet, dass** der Innendurchmesser des laufenden Teils des röhrenförmigen Elements im Wesentlichen dem Außendurchmesser des Bürstchens (62) entspricht, und dass der Durchmesser des ersten Endes des röhrenförmigen Elements kleiner ist als der des laufenden Teils des röhrenförmigen Elements.

10. Vorrichtung nach einem der Ansprüche 1 bis 9,
**dadurch gekennzeichnet, dass** sie lösbare Mittel zum Befestigen der Reinigungsmittel (62) am Ende der Haltemittel (58) aufweist.

11. Vorrichtung nach einem der Ansprüche 1 bis 10,
**dadurch gekennzeichnet, dass** sie Mittel zum Beschränken der relativen Verschiebung der Halte- (58) und Reinigungsmitteln (62) bezüglich des röhrenförmigen Führungselements umfasst.
